# EUROPEAN PATENT SPECIFICATION

(11) **EP 1 712 965 B1**
(45) Date of publication and mention of the grant of the patent: **14.05.2008**
(21) Application number: 05425218.4
(22) Date of filing: 13.04.2005
(51) Int. Cl.: G05B 19/406, B25J 9/16, G08B 29/16

(54) **System and method for controlling industrial robots and the like, comprising a wireless portable programming terminal**
Vorrichtung und Verfahren zur Steuerung von industriellen Robotern oder dergleichen, umfassend ein tragbares drahtloses Programmierendgerät
Dispositif et méthode pour la commande de robots industriels ou d'appareils similaires, comprenant un terminal de programmation portable sans fil

(43) Date of publication of application: 18.10.2006
(73) Proprietor: COMAU S.p.A., 10095 Grugliasco (Torino) (IT)
(72) Inventor: Calcagno, Renzo, 10095 Grugliasco (Torino) (IT); Bonivento, Alvise, 10095 Grugliasco (Torino) (IT); Petrovic, Dragan, 10095 Grugliasco (Torino) (IT)
(74) Representative: Gallarotti, Franco

(56) References cited:
- EP-A- 1 407 860
- WO-A-03/035335
- US-B1- 6 711 713
- US-B2- 6 560 513

## Description

The present invention relates to industrial robots and has been developed with particular attention to the possible use of robots comprising a manipulator, a unit for controlling the manipulator and a portable terminal for manually programming and controlling the robot, wherein the terminal is designed for communicating in a wireless mode with the control unit.

By the term wireless is meant here a communication that implies a transmission of signals without the use of cables, by means of electromagnetic waves, preferably by radio-frequency but possibly also by ultrasounds or infrared radiations o any other frequency range.

The activity of programming a robot essentially consists of teaching the robot itself the trajectory that a point of the manipulator thereof will have to repeat automatically while working, in order to perform a certain operation. Said point is usually constituted by the so-called "Tool Centre Point" or TCP, which identifies the position of the active part of a tool, mounted on the manipulator.

Most of the programming time is dedicated to commanding the robot manually, to identify the optimal points of the movement trajectories of the manipulator, and to memorize their co-ordinates.

For this purpose the aforesaid portable programming terminal is used, also known as *teach pendant,* which is operatively connected to the robot control unit and typically comprises a display and a series of push-button used to program and control the robot; the teach pendant can also be used to monitor the program of the robot, check the machine's states, modify certain parameters of the program and so on.

The terminal is usually connected to the control unit via a long shielded cable, which allows the operator to move in proximity to the manipulator working area to be able to accurately verify the relevant points and trajectories of the TCP.

To command variations in the posture of the manipulator manually, the operator uses specific push-buttons on the terminal, known as "jog" push-buttons, which command the actuation of one or more axis of the manipulator. By acting on the jog push-buttons, the TCP can be actuated in a specific positive or negative direction within a reference system, selected by the operator, among a plurality of possible reference or co-ordinate systems stored in the control unit, by means of other push-buttons or keys present on the terminal.

It should be recalled that the control unit of a robot is normally capable of operating according to three different modes or states, i.e. a Programming mode, an Automatic mode, and a Remote mode.

In the Programming mode, an operator acts, as stated, near the manipulator, to control its operation, store the programme steps and programme its operating activity, through the terminal. In this mode, speed restrictions are applied to the movements of the manipulator and the operator has available in his/her hands, since they are present on the terminal, an emergency stop push-button and an enabling device.

In the Automatic mode, the robot performs its operating programme, obtained as explained above, possibly in combination with other robots or automatic equipments, inside a cell that is protected against personnel access, but is in view of an operator. The terminal, from which the programme execution is started, can be located in a fixed position near the cell, with the emergency stop push-button active, through which the operator can stop the robot, if necessary.

In the Remote mode, too, the robot performs an operating programme inside a cell that is protected against personnel access, but in this case programme execution is started by a cell supervisor, such as a PLC, which for example controls both the robot and other automatic equipment present in the same cell; the terminal can in any case be positioned near the cell, with an emergency stop push-button active for any eventuality.

The step of programming the robot using the portable terminal is clearly the one that entails the highest risks for the operator, who has to follow the TCP closely in order visually to check its positioning, continually moving around the manipulator.

For safety reasons, the terminal is, for this purpose, provided with the aforesaid Enabling Device, which usually comprises a three-position push-button. Only the central position is operative and, if maintained, it allows to move the manipulator, whilst the release position and the full pressure position disable the movement of the manipulator. In practice, therefore, if in the Programming mode the enabling device is not kept active by the operator, the manipulator cannot perform any movements.

The programming and actuation commands imparted manually through the terminal must reach the robot control unit in certain and unambiguous fashion, without interference that could give rise, for example, to undesired movements of the manipulator. In most known applications, this risk is avoided by the fact that the terminal is connected to the respective control unit through the aforesaid cable, which is shielded to prevent communication systems or electromagnetic interference present in the workplace from influencing the quality of the instructions sent through the terminal.

The cable connecting the terminal to the control unit allows a limited manoeuvrability of the operator in his/her programming activity near the manipulator, because (s)he has to move continually around the manipulator; another drawback is that the cable can be caught or tangled with other cables and must then be freed. Moreover, the cable is subject to wear and damage, with the consequent need to repair or replace it.

To overcome these drawbacks, it has been proposed operatively to connect the terminal to the respective robot control unit in wireless mode. As mentioned above, however, in the working environment where the robot and the respective terminal operate there may be present may other signals transmitted in air, or potentially disturbing electromagnetic waves, with risks of interference. Therefore, it is necessary to ensure that the transmission of information in air between a terminal and the respective control unit takes place in a safe manner, particularly in connection with the safety information, i.e., information relating to the status of the emergency stop push-button and the enabling device.

Currently known solutions for "safe" wireless transmission of commands for robots are described in documents JP 11073201 and JP 9117888.

The aforementioned solutions provide for the execution of an emergency or safety stop of the robot if a given signal (a reply signal, in the case of JP 11073201, and a base signal, in the case of JP 9117888) is not received by the control unit. This means that an occasional interruption of the signal for a short time interval (of the order of milliseconds) can cause the robot to stop operating, although in fact it is in a condition of normal and safe operation. To overcome this drawback, WO 02/078915 proposes a transmission technique in which occasional delays in the reception of data packets are allowed, without said delays being interpreted as an emergency command.

A system and a method having the features of the preamble of claims 1 and 7 is known from US-B2-6 560 513.

The present invention aims to provide a new control system for robots or similar manoeuvrable apparatuses, comprising a portable programming terminal connected in wireless mode to a control unit, which allows the safe transmission of signals between the portable terminal and the control unit, with particular reference to emergency and safety signals, without superposition of signals or communication delays.

These and other objects, which shall become readily apparent hereafter, are achieved according to the invention by a control system for industrial robots and the like, comprising a manipulator, a unit for controlling the manipulator and a wireless portable terminal, having the features set out in claim 1. These objects are also achieved by a method for controlling an industrial robot or the like having the features set out in claim 7, as well as by an industrial robot or the like having the above said control system and/or implementing the above said control method.

Preferred features of the control system and method are set out in claims 2-6 and 8-10, respectively.

Additional aims, characteristics and advantages of the present invention shall become readily apparent from the detailed description that follows and from the accompanying drawings, provided purely by way of explanatory and non limiting example, in which:
- Figure 1 is a schematic view of a robot provided with a control system according to the present invention;
- Figure 2 is a perspective view of the front part of a portable programming terminal comprised in the system according to the invention;
- Figure 3 is a perspective view of the rear part of the terminal of Figure 2.

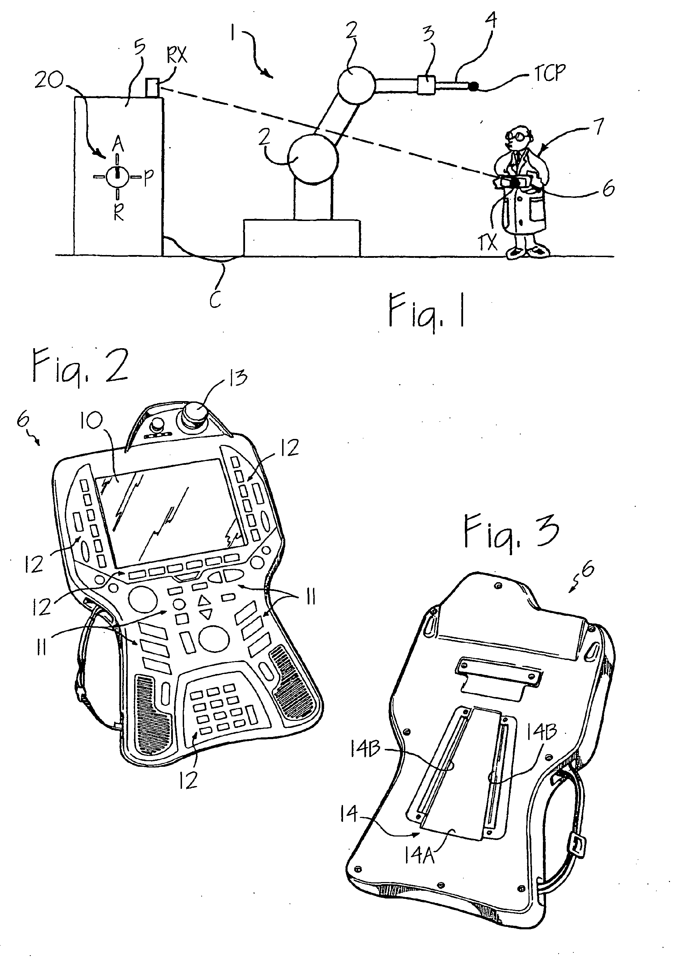

In Figure 1, an industrial robot according to the invention is represented, comprising a manipulator 1 having a plurality of movable parts articulated by means of joints 2 and an end wrist 3 bearing a generic tool 4; as explained in the introductory part of the present description, the end of the tool 4 is the so-called "Tool Centre Point", designated as TCP.

The manipulator 1 is connected, through an electric cable C, to a respective control unit 5; a portable terminal or Teach Pendant 6 is also connected, in wireless mode, to the unit 5, used by an operator 7 to programme the robot 1.

As previously explained, in the Programming mode, the operator 7 "simulates" a working phase which the manipulator 1 will then be required to complete in the Automatic or Remote mode, varying the posture of the manipulator through the jog push-buttons, provided on the terminal 6; through other push-buttons of the terminal 6, the operator 7 stores the co-ordinates of the optimal path identified for the TCP.

Figures 2 and 3 schematically show a possible embodiment of the terminal 6, which comprises at least
- a display designated by the reference number 10, for example a colour and back-light display, through which the machine states, the programme steps, any alarms, position and position quantities of the manipulator axes can be monitored; the display 10 is used both when programming the positions of the axes and of the movement programme steps, and as a remote monitor of the control unit 5;
- a group of push-buttons to command the movement of the axes of the manipulator 1, some of which are schematically designated by the reference 11; the push-buttons of this group comprise in particular those for selecting the desired movement reference system and the jog push-buttons;
- a group of editing keys, some of which are schematically designated by the reference 12, used to navigate within the programmes shown on the display 10 and to activate the various functions;
- an emergency stop device, designated by the reference 13, which in the exemplified case is constituted by a mushroom-head push-button located on the front of the terminal 6; the pressure of said push-button allows immediately to stop/deactivate the movement of the manipulator and/or of the entire operating cell in which the manipulator operates;
- an enabling device with three positions, globally designated 14 in Figure 3, which must be used in combination with the push-buttons of the group 11 during the learning phases or the manual control of the movements of the manipulator 1; in practice, the activation of the device 14 enables the powering of the drives that allow the actuation of the motors of the manipulator 1.

The device 14 must be kept active by the operator 7 to allow the manipulator to perform the desired movements during the programming phase. For this purposes, in the preferred embodiment of the invention, in the rear part of the body of the terminal 6 a longitudinally extended recess is defined centrally, designated 14A in Figure 3; from each of the longitudinal surfaces of the recess 14A the key 14B of a respective push-button projects towards the interior of the recess itself, which is part of the device 14; it is readily apparent that the two keys 14B are substantially shaped as elongated bars. The recess 14A and the keys 14B serve as a grip area for the ends of the fingers of the right or left hand of the operator 7, though not the thumbs, when the operator holds the terminal 6 along one or both lateral surfaces thereof; in this way, one of the two keys 14B is necessarily pressed, to activate the use of the push-buttons for controlling the movements of the manipulator 1; vice versa, if neither of the two keys 14B is pressed, or both are pressed, the terminal 6 does not allow to command the movement of the manipulator 1.

The manner of the practical embodiment of the hardware relating to the unit 5 and to the terminal 6, preferably provided with respective microprocessor control systems, are outside the scope of the present description. It is sufficient to specify here that the terminal 6 is provided with means for transmitting signals in air, designated by the reference TX in Figure 1, and that the control unit 5 is provided with respective means for receiving said signals, designated RX. The means TX and RX are dimensioned to have a range of a few meters, thus within the field of action of the terminal 6 with respect to the control unit 5 of the robot.

As mentioned previously, the display 10 can serve as a remote monitor of the control unit 5, and hence the terminal 6 will be able to receive signals in wireless mode from the unit 5; for this purpose, the unit 5 will be provided with transmitter means and the terminal with respective receiver means, not shown in the figures, which can be of the same type as those designated as TX and RX.

The wireless connection employed for the communication between the terminal 6 and the control unit 5 essentially allows the exchange of the three following types of information:
a) operative data, such as information concerning the co-ordinates on the axes, the jog commands and in general the selections performed through the terminal 6, as well as the downloading of software from the same terminal to the unit 5; as stated, the unit 5 can also send data to the terminal 6, such as information necessary to update the display windows on the display 10, signalling codes (alarms, machine states, etcetera), programme loading;
b) state of the emergency stop device 13;
c) state of the enabling device 14.

According to an aspect of the invention, specific and dedicated resources are allocated for the communication from the terminal 6 to the control unit 5, and in particular different transmission sub-channels for the different types of information a), b) and c). The purpose of this allocation is to favour the safety of the personnel who use the terminal 6, dedicating redundant resources to the emergency stop functionalities (information b) and to the enabling of the robot movement (information c). For this purpose, in the preferred embodiment of the invention, the emergency stop device 13 and the enabling device 14 are read by the logic that manages the radio transmission by at least a double input each.

The transmission of the information a), b) and c) takes place using preferably the wireless transmission system defined by the IEEE 802.11a standard (whereto reference is integrally made), and known as Wi-Fi.

The transmission of the information preferably occurs in radio-frequency (RF), with spectrum division or in single band. In the first case, the total band is divided into sub-bands, to each of which a sub-channel is assigned (FDM technique, i.e. Frequency Division Multiplexing) for respective information a), b) and c). In the second case, the discriminating factor of the sub-channels is not frequency, as in the previous case, but for example time (TDM technique, i.e. Time Division Multiplexing) or an appropriate code (CDM technique, i.e. Code Division Multiplexing) or another known technique; in this case, therefore, communication over multiple sub-channels is meant as a transmission in a same band of data packets having different or univocal identifying codes, each relating to a respective type of information a), b) and c).

Regardless of the technique used to define the transmission sub-channels, in the preferred embodiment of the invention:
- a sub-channel is dedicated to the exchange of data (information a);
- at least two sub-channels are dedicated to the transmission of the information of the state of the emergency stop device 13 (information b);
- at least two sub-channels are dedicated to the transmission of the information of the state of the enabling device 14 (information c).

At the level of the control unit 5, the state of the devices 13 and 14 is thus read by means of double input; the same information is transmitted on two sub-channels, preferably with opposite polarities on each sub-channel, i.e. with positive logic on a sub-channel and negative logic on the other, to read the double input for each device 13, 14.

The pairs of radio sub-channels dedicated to the transmission of the safety signals b) and c) are continuously tested through a polling procedure by means of sampling by the unit 5, with a rate that can vary as a function of the activity of the processor that manages the communication; also executed is at least a continuous check of the polarity of the inputs of the signals b) and c), and of the consistency between the double input signal. The radio sub-channels relating to the information b) and c) have a different priority assigned to them, to allow the timeliness of safety information.

The state of emergency of the system is detected and immediately signalled in case of fault, inconsistency or loss of the carrier signal within the set polling time. The immediate reaction time of the system allows to deactivate the power circuits of the manipulator 1 very following the manual operation of the devices.

Safety is simultaneously achieved both from the side of the terminal 6 and from the side of the control unit 5. In particular, in addition to the transmission on multiple radio sub-channels, on the terminal side the following checks are at least performed:
- a check of the inputs;
- a polarity check;
- a consistency check;
- a continuous operation check (i.e., whether the push-button 13, 14 has been activated, in double input);

On the control unit side, safety is achieved through at least:
- a reception on multiple radio sub-channels;
- a polarity check;
- a consistency check;
- am operation check (i.e., whether the push-button 13, 14 has been activated;
- a check of the carrier;
- driving the emergency circuits (respectively associated to the emergency stop device 13 and to the enabling device 14), with control feedback.

The solution described herein offers considerable benefits, in terms of:
- safety of radio sub-channels dedicated to the emergency circuits 13 and 14, without superposition or delay due to data communication;
- distribution of the signals over a broad spectrum;
- immediate detection of faults.

As mentioned previously, the discriminating factor of the sub-channels to be used to transmit the information a), b) and c) may also not be frequency, but for example time or an appropriate code. In this implementation, a suitable finite state machine is associated to the transmitter means TX of the terminal 6, which can be implemented in any known way and operative to assign different priority codes to data packets transmitted cyclically which contain, respectively, the information a), b) and c); in particular, the highest priority can be assigned to the packets relating to the information c), the lowest priority to the packets relating to the information a), while a priority being intermediate with respect to the first two can be assigned to the packets relating to the information b).

In this implementation, therefore, the sub-channels are identified by the type or by the degree of priority of the information a), b) or c), transmitted in respective packets on a same channel or frequency band. In this case, too, redundant resources are allocated for the emergency stop functionalities (information b) and for the enabling of the movement of the robot (information c), with reading through at least double input each, as explained previously, and hence with cyclical transmission of:
- one packet (i.e., a sub-channel) dedicated to data exchange (information a);
- at least two packets (i.e., two sub-channels) dedicated to the transmission of the information of the state of the emergency stop device 13 (information b);
- at least two packets (i.e., two sub-channels) dedicated to the transmission of the information of the state of the enabling device 14 (information c).

On the receiver side, the receiver means RX of the unit 5 comprise suitable logic processing means, that can be implemented in any known way, able to manage the priorities of the different information, with the purpose of processing the safety information first, i.e., in order, the information c) and b), and lastly the normal data, i.e. the information a). Otherwise, the exchange and control procedures are similar to those described previously, and hence with the reading of the state of the devices 13 and 14 performed by means of double input, with the possibility of transmitting a same information b) or c) with opposite polarity on each of the respective two sub-channels/packets, i.e. with positive logic in one packet and negative logic on the other.

According to a further aspect of the invention, it is provided the possibility to vary dynamically the number and the position of the sub-channels dedicated to communication between the terminal 6 and the control unit 5.

In particular, the transmission sub-channels are assigned according to the operative state of the control unit 5 which, as stated, is capable of operating in three selectable modes, i.e. Programming mode, Automatic mode and Remote mode. In Figure 1, the reference number 20 schematically designates a selector of a desired mode between Programming, Automatic and Remote, respectively designated with the letters P, A and R.

In accordance with this aspect, diversification of the number of sub-channels employed is performed in function of the operative mode of the control unit 5; in this way, the communication dynamically occupies a different number of sub-channels, with a consequent reduction in the use of resources.

As indicated above, the Programming mode is the machine state that requires the utmost attention in terms of safety for the operator; in this view, the sub-channels dedicated to the exchange of information between the terminal 6 and unit 5 will be assigned as indicated above, i.e. with:
- at least two sub-channels dedicated to the transmission of the information of the state of the emergency stop device 13;
- at least two sub-channels dedicated to the transmission of the information of the state of the enabling device 14;
- one sub-channel dedicated to the exchange of data.

In the Automatic mode, the operator is not allowed to enter the cell to command through the terminal 6 the movements of the manipulator 1, such that the enabling device 14 cannot be used; on the contrary, the emergency stop device 13 must always be kept active for any eventuality; if the Automatic mode is selected, the sub-channels will therefore be allocated as follows:
- at least two sub-channels dedicated to the transmission of the information of the state of the emergency stop device 13;
- no sub-channel dedicated to the transmission of the information of the state of the enabling device 14;
- one sub-channel dedicated to the exchange of data.

As in the previous case, in the Remote mode the operator is also not allowed to enter the cell to manually command the manipulator, such that the enabling device 14 cannot be used; the sub-channels will therefore be the same as in the Automatic mode, and thus:
- at least two sub-channels dedicated to the transmission of the information of the state of the emergency stop device 13;
- no sub-channel dedicated to the transmission of the information of the state of the enabling device 14;
- one sub-channel dedicated to the exchange of data.

The dynamic assignment of the sub-channel provided in the preferred embodiment of the system according to the invention offers the choice of immediately changing the priority level. The unused sub-channels are freed and are available for other transmissions, with energy savings in transmission and reception, and hence an increase in the duration of the battery of the terminal.

Clearly, numerous variants to the system and the method described by way of example herein are possible for the man skilled in the art, without thereby departing from the scope of the invention as defined in the claims.

For example, the aforesaid transmission of information can be achieved combining the two techniques mentioned above, and hence dividing the transmission spectrum into multiple sub-channels, each of which is further sub-divided into multiple communication streams by means of data packets having different identity code/priority, each pertaining to a respective type of information a), b) and c).

## Claims

1. A system for controlling operation of an industrial robot or the like, having a manipulator (1), a unit (5) for controlling the manipulator (1) and a portable programming terminal (6) operatively connected to the control unit (5), wherein the terminal (6) comprises
- movement control means (11), able to be operated manually to provide the control unit (5) with at least a first information, for moving the manipulator (1);
- an emergency stop device (13), able to be operated manually to provide the control unit (5) with at least a second information, for stopping the manipulator (1);
- an enabling device (14), able to be operated manually to provide the control unit (5) with at least a third information, aimed at making the movement control means (11) operative,
the terminal (6) and the control unit (5) being connected in wireless mode for the purposes of transmitting said information, the terminal (6) comprising at least respective transmitter means (TX) and the control unit (5) comprising at least respective receiver means (RX),
**characterised in that**
- the transmitter means (TX) and the receiver means (RX) are designed for, respectively, transmitting and receiving the first information and at least one of the second and the third information through dedicated sub-channels, i.e., differing from each other,
- the system comprises selection means (20), for selecting a desired operating mode for the control unit (5) among a plurality of possible operating modes (P, A, R), and
- the selection means (20) are designed for assigning sub-channels as a function of the selected operating mode, such that the communication dynamically occupies a different number of sub-channels.

2. System as claimed in claim 1, **characterised in that** the transmitter means (TX) are designed for transmitting at least one of the second and the third information through two different sub-channels, i.e. transmitting a same second and/or third information by means of a first and a second sub-channel.

3. System as claimed in claim 2, **characterised in tha**t the transmitter means (TX) are operative to transmit the second and/or the third information in different ways through the respective first and second sub-channel, and namely with positive logic through the first sub-channel and negative logic through the second sub-channel.

4. System as claimed in claim 1, **characterised in that** in a first of said modes (P):
- a sub-channel is dedicated to the transmission of the first information;
- two sub-channels are dedicated to the transmission of the second information;
- two sub-channels are dedicated to the transmission of the third information,
and that in a second of said modes:
- one sub-channel is dedicated to the transmission of the first information;
- two sub-channels are dedicated to the transmission of the second information;
- no sub-channel is dedicated to the transmission of the third information.

5. System as claimed in claim 2, **characterised in that** the receiving means (TX) are operative to test the two sub-channels continuously in polling, by means of sampling.

6. System as claimed in claim 1, **characterised in that** the information is exchanged in accordance with the IEEE 802.11a standard.

7. A method for controlling the operation of an industrial robot or the like having a manipulator (1), a unit (5) for controlling the manipulator (1) and a portable programming terminal (6) connected to the control unit (5), wherein there is provided the transmission in wireless mode from the terminal (6) to the control unit (5) of operative information, in particular for controlling movement of the manipulator (1), and of safety or emergency information, **characterised in that**
- the transmission of the safety or emergency information takes place by means of one or more dedicated communication sub-channels, differing from one or more communication sub-channels, used for transmitting the operative information,
- a desired operative mode for the control unit (5) is selectable among a plurality of possible operative modes (P, A, R), and
- said communication sub-channels are assigned as a function of the selected operative mode, such that the communication dynamically occupies a different number of communication sub-channels.

8. Method as claimed in claim 7, wherein a same safety or emergency information is transmitted through two different sub-channels.

9. Method as claimed in claim 8, wherein the same safety or emergency information is transmitted in different ways on the respective two sub-channels, and namely with positive logic on one sub-channel and with negative logic on the other sub-channel, i.e. with opposite polarities between the two sub-channels.

10. Method as claimed in claim 7, wherein the safety or emergency information has assigned a transmission/reception priority higher than the priority of the operative information.

## Patentansprüche

1. System für die Steuerung des Betriebs eines Industrieroboters oder Ähnlichem, wobei das System einen Manipulator (1), eine Einheit (5) für die Steuerung des Manipulators (1) sowie ein tragbares Programmier-Terminal (6) besitzt, das betriebsmäßig mit der Steuereinheit (5) verbunden ist, wobei das Terminal (6) enthält:
- eine Bewegungs-Steuereinrichtung (11), die händisch betätigt werden kann, um der Steuereinheit (5) zumindest eine erste Information für die Bewegung des Manipulators (1) zu liefern;
- eine Nothalt-Einrichtung (13), die händisch betätigt werden kann, um der Steuereinheit (5) zumindest eine zweite Information zu liefern, um den Manipulator (1) anzuhalten;
- eine Einschalt-Einrichtung (14), die händisch betätigt werden kann, um der Steuereinheit (5) zumindest eine dritte Information zu liefern, die darauf gerichtet ist, um die Bewegungs-Steuereinrichtung (11) in Betrieb zu setzen,
wobei das Terminal (6) und die Steuereinheit (5) in einer drahtlosen Betriebsart verbunden sind, um die Information zu übertragen, wobei das Terminal (6) zumindest eine entsprechende Sender-Einrichtung (TX) und die Steuereinheit (5) zumindest eine entsprechende Empfänger-Einrichtung (RX) enthält,
**dadurch gekennzeichnet, dass**
- die Sender-Einrichtung (TX) und die Empfänger-Einrichtung (RX) so aufgebaut sind, dass sie jeweils die erste Information und zumindest eine Information der zweiten und der dritten Information über fest zugeordnete Unterkanäle senden und empfangen, d.h. über Kanäle, die voneinander getrennt sind,
- das System eine Auswahl-Einrichtung (20) enthält, um unter einer Vielzahl von möglichen Betriebsarten (P, A, R) eine gewünschte Betriebsart für die Steuereinheit (5) auszuwählen, und
- die Auswahl-Einrichtung (20) so aufgebaut ist, um als Funktion der ausgewählten Betriebsart Unterkanäle zuzuordnen, so dass die Übertragung dynamisch eine unterschiedliche Anzahl von Unterkanälen belegt.

2. System gemäß Anspruch 1, **dadurch gekennzeichnet, dass** die Sender-Einrichtung (TX) so aufgebaut ist, dass sie zumindest eine der zweiten und der dritten Information über zwei getrennte Unterkanäle überträgt, d.h. eine gleiche zweite und/oder dritte Information über einen ersten und einen zweiten Unterkanal überträgt.

3. System gemäß Anspruch 2, **dadurch gekennzeichnet, dass** die Sender-Einrichtung (TX) in Betrieb steht, um die zweite und/oder die dritte Information auf unterschiedliche Art über den entsprechenden ersten und zweiten Unterkanal zu übertragen, und zwar mit einer positiven Logik über den ersten Unterkanal und mit einer negativen Logik über den zweiten Unterkanal.

4. System gemäß Anspruch 1, **dadurch gekennzeichnet, dass** in einer ersten Betriebsart der Betriebsarten (P):
- ein Unterkanal der Übertragung der ersten Information zugewiesen ist;
- zwei Unterkanäle der Übertragung der zweiten Information zugewiesen sind;
- zwei Unterkanäle der Übertragung der dritten Information zugewiesen sind,
und dass in einer zweiten Betriebsart der Betriebsarten:
- ein Unterkanal der Übertragung der ersten Information zugewiesen ist;
- zwei Unterkanäle der Übertragung der zweiten Information zugewiesen sind;
- kein Unterkanal der Übertragung der dritten Information zugewiesen ist.

5. System gemäß Anspruch 2, **dadurch gekennzeichnet, dass** die Empfänger-Einrichtung (TX) in Betrieb steht, um die beiden Unterkanäle fortlaufend zu prüfen, indem sie eine periodische Abfrage mit Hilfe einer Abtastung durchführt.

6. System gemäß Anspruch 1, **dadurch gekennzeichnet, dass** die Information in Übereinstimmung mit der Norm IEEE 802.11a ausgetauscht wird.

7. Verfahren für die Steuerung des Betriebs eines Industrieroboters oder Ähnlichem, der einen Manipulator (1), eine Einheit (5) für die Steuerung des Manipulators (1) sowie ein tragbares Programmierterminal (6) besitzt, das mit der Steuereinheit (5) verbunden ist, wobei in einer drahtlosen Betriebsart vom Terminal (6) zur Steuereinheit (5) die Übertragung von Betriebsinformationen, im Besonderen für die Steuerung der Bewegung des Manipulators (1), sowie von Sicherheits- oder Notfall-Informationen vorgesehen ist,
**dadurch gekennzeichnet, dass**
- die Übertragung der Sicherheits- oder Notfall-Informationen mit Hilfe von einem oder mehreren zugewiesenen Unterkanälen erfolgt, die von einem oder mehreren Unterkanälen getrennt sind, die für die Übertragung der Betriebsinformationen verwendet werden,
- eine gewünschte Betriebsart für die Steuereinheit (5) unter einer Vielzahl von möglichen Betriebsarten (P, A, R) ausgewählt werden kann, und
- der Übertragungs-Unterkanal als Funktion der ausgewählten Betriebsart so zugewiesen wird, dass die Übertragung dynamisch eine unterschiedliche Anzahl von Übertragungs-Unterkanälen belegt.

8. Verfahren gemäß Anspruch 7, wobei die gleichen Sicherheits- oder Notfall-Informationen über zwei getrennte Unterkanäle übertragen werden.

9. Verfahren gemäß Anspruch 8, wobei die gleichen Sicherheits- oder Notfall-Informationen auf unterschiedliche Art auf den entsprechenden beiden Unterkanälen übertragen werden, und zwar mit einer positiven Logik auf einem Unterkanal und mit einer negativen Logik auf dem anderen Unterkanal, d.h. mit entgegengesetzten Polaritäten zwischen den beiden Unterkanälen.

10. Verfahren gemäß Anspruch 7, wobei den Sicherheits- oder Notfall-Informationen eine Sende/Empfangs-Priorität zugewiesen ist, die höher als die Priorität der Betriebsinformationen ist.

## Revendications

1. Système pour commander le fonctionnement d'un robot industriel ou analogue, comportant un manipulateur (1), une unité (5) pour commander le manipulateur (1) et un terminal de programmation portable (6) relié en fonctionnement à l'unité de commande (5), dans lequel le terminal (6) comporte
- un moyen de commande de mouvement (11), pouvant être actionné manuellement pour délivrer à l'unité de commande (5) au moins une première information, pour déplacer le manipulateur (1) ;
- un dispositif d'arrêt d'urgence (13), pouvant être actionné manuellement pour délivrer à l'unité de commande (5) au moins une seconde information, pour arrêter le manipulateur (1) ;
- un dispositif de sollicitation (14), pouvant être actionné manuellement pour délivrer à l'unité de commande (5) au moins une troisième information, visant à activer le moyen de commande de mouvement (11),
le terminal (6) et l'unité de commande (5) étant reliés par mode sans fil dans le but de transmettre ladite information, le terminal (6) comportant au moins des moyens de transmission respectifs (TX) et l'unité de commande (5) comportant au moins des moyens de réception respectifs (RX),
**caractérisé en ce que**
- les moyens de transmission (TX) et les moyens de réception (RX) sont conçus pour, respectivement, transmettre et recevoir la première information et au moins l'une de la seconde et de la troisième information par l'intermédiaire de sous-canaux dédiés, c'est-à-dire, différents les uns des autres,
- le système comporte un moyen de sélection (20), pour sélectionner un mode de fonctionnement désiré pour l'unité de commande (5) parmi une pluralité de modes de fonctionnement possibles (P, A, R), et
- le moyen de sélection (20) est désigné pour assigner les sous-canaux en tant que fonction du mode de fonctionnement sélectionné, de sorte que la communication occupe dynamiquement un nombre différent de sous-canaux.

2. Système selon la revendication 1, **caractérisé en ce que** les moyens de transmission (TX) sont conçus pour transmettre au moins l'une de la seconde et de la troisième information par l'intermédiaire de deux sous-canaux différents, c'est-à-dire transmettant une seconde et/ou une troisième information similaire au moyen d'un premier et d'un second sous-canal.

3. Système selon la revendication 2, **caractérisé en ce que** les moyens de transmission (TX) fonctionnent pour transmettre la seconde et/ou la troisième information de différentes manières par l'intermédiaire du premier et du second sous-canal, et notamment avec une logique positive par l'intermédiaire du premier sous-canal et d'une logique négative par l'intermédiaire du second sous-canal.

4. Système selon la revendication 1, **caractérisé en ce que** dans le premier desdits modes (P) :
- un sous-canal est dédié à la transmission de la première information ;
- deux sous-canaux sont dédiés à la transmission de la seconde information ;
- deux sous-canaux sont dédiés à la transmission de la troisième information,
et **en ce que** dans un second desdits modes :
- un sous-canal est dédié à la transmission de la première information ;
- deux sous-canaux sont dédiés à la transmission de la seconde information ;
- aucun sous-canal n'est dédié à la transmission de la troisième information.

5. Système selon la revendication 2, **caractérisé en ce que** les moyens de réception (RX) fonctionnent pour tester continûment les deux sous-canaux en mode interrogation, au moyen d'un échantillonnage.

6. Système selon la revendication 1, **caractérisé en ce que** l'information est échangée conformément avec le standard IEEE 802.11a.

7. Procédé pour commander le fonctionnement d'un robot industriel ou analogue possédant un manipulateur (11), une unité (5) pour commander le manipulateur (1) et un terminal de programmation portable (6) relié à l'unité de commande (5), dans lequel est prévue la transmission en mode sans fil du terminal (6) à l'unité de commande (5) de l'information de fonctionnement, en particulier pour commander le mouvement du manipulateur (1), et d'une information de sécurité ou d'urgence, **caractérisé en ce que**
- la transmission de l'information de sécurité ou d'urgence se produit au moyen d'un ou de plusieurs sous-canaux de communication dédiés, différents de l'un ou de plusieurs sous-canaux de communication utilisés pour transmettre l'information de fonctionnement,
- un mode de fonctionnement désiré pour l'unité de commande (5) peut être sélectionné parmi une pluralité de modes de fonctionnement possibles (P, A, R), et
- lesdits sous-canaux de communication sont assignés en tant que fonction du mode de fonctionnement sélectionné, de sorte que la communication occupe dynamiquement un nombre différent de sous-canaux de communication.

8. Procédé selon la revendication 7, dans lequel une même information de sécurité ou d'urgence est transmise par l'intermédiaire de deux sous-canaux différents.

9. Procédé selon la revendication 8, dans lequel la même information de sécurité ou d'urgence est transmise de différentes manières par les deux sous-canaux respectifs, et notamment avec une logique positive par un sous-canal et avec une logique négative par l'autre sous-canal, c'est-à-dire avec des polarités opposées entre les deux sous-canaux.

10. Procédé selon la revendication 7, dans lequel à l'information de sécurité ou d'urgence est assignée une priorité de transmission/réception supérieure à la priorité de l'information de fonctionnement.
